Europäisches Patentamt

European Patent Office

Office européen des brevets

(11) Veröffentlichungsnummer: **0 248 379**
**A2**

(12) **EUROPÄISCHE PATENTANMELDUNG**

(21) Anmeldenummer: 87107891.1

(22) Anmeldetag: 01.06.87

(51) Int. Cl.⁴: **G01N 30/60** , G01N 30/56 , B01D 15/08

(30) Priorität: 06.06.86 HU 239486

(43) Veröffentlichungstag der Anmeldung:
09.12.87 Patentblatt 87/50

(84) Benannte Vertragsstaaten:
**AT CH DE FR IT LI SE**

(71) Anmelder: **Magyar Tudományos Akadémia Kutatási Eszközöket Kivitelezö Vállalata Komocsy u. 29-31 H-1141 Budapest(HU)**

(72) Erfinder: **Poppe, László, Dipl.-Ing. Lövöház u.19 HU-1029 Budapest(HU)**
Erfinder: **Meisel, Tibor, Dipl.-Ing. Attila u.12 HU-1013 Budapest(HU)**
Erfinder: **Agai, Béla, Adjunkt Rozália u. 35 HU-1031 Budapest(HU)**
Erfinder: **Novák, Lajos Szolyva u. 2/b HU-1126 Budapest(HU)**

(74) Vertreter: **Patentanwälte Viering & Jentschura Steinsdorfstrasse 6 D-8000 München 22(DE)**

(54) **Nachfüllbare Niederdruckkolonne für präparative Chromatographie.**

(57) Die erfindungsgemässe nachfüllbare Niederdruckkolonne für präparative Chromatographie weist einen Absorptionslösung enthaltenden rohrförmigen Kolonnenkörper /1/ auf, an dessen beiden Enden je ein Halsabschnitt /2/ ausgebildet ist und in jedem Halsabschnitt /2/ ein gegen axiale Bewegung befestigter und einen Einströmkanal /3/ enthaltender Kern /4/ angeordnet ist, zwischen dem und der Wandung des Halsabschnittes /2/ mindestens ein elastischer Dichtring /7/ axial unverschiebbar angeordnet ist, und dem mittels einem an Halsabschnitt /2/ des Kolonnenkörpers /1/ lösbar befestigten Element /9/ in seiner Lage festgehaltenen Kern /4/ ist ein Filter- und Verteilerelement /5/ unmittelbar, im Weg des Einströmkanals /3/ angeschlossen.

## NACHFÜLLBARE NIEDERDRUCKKOLONNE FÜR PRÄPARATIVE CHROMATOGRAPHIE

Die Erfindung bezieht sich auf eine nachfüllbare Niederdruckkolonne für präparative Chromotographie, die einen, eine Absorptionslösung enthaltenden rohrförmigen Körper aufweist, an dessen beiden Enden je ein Halsabschnitt ausgebildet ist, und in jedem Halsabschnitt ein gegen axiale Bewegung befestigter und einen Einströmkanal enthaltender Kern angeordnet ist, dem ein Filter-und Verteilerelement im Weg des Einströmkanals angeschlossen ist.

Mit der Entwicklung der Medikamentherstellung, der Pflanzschutzmittel-und Feinchemikalienherstellung ferner mit der Entwicklung der Herstellung biochemischer Präparate meldet sich ein kontinuierlich wachsender Bedarf für zur Trennung von Materialmischungen geeignete Methoden und Einrichtungen. Die verschiedenen chromatographischen Verfahren, die eine Kolonne verwenden, sind zur Trennung komplizierter Materialmischungen unter laboratorischen oder sogar industriellen Umständen geeignet. Die verschiedenen chromatographischen Verfahren können in einer gleich oder fast gleich ausgeführten Einrichtung durchgeführt werden, die dem Wesen nach eine mit Absorptionsmaterial gefüllte Kolonne ist, durch welche eine Flüssigkeit das sog. Elutionsmittel durchströmt.

Im Interesse der Verminderung des Zeit-und Materialaufwandes von präparativen chromatographischen Versuchen wird das Elutionsmittel gewöhnlich mittels einem Unterdruck oder einem Druck in einem Zwangs durchlauf durch die Kolonne durchgeführt. Diese bekannten Verfahren weisen den Nachteil auf, dass jedes Mal neu aufgefüllte Einwegkolonnen verwendet sind, welche Lösung wegen der teuren Füllungen sehr kostspielig und hinsichtlich der Reproduzierbarkeit der Messungen keineswegs ideal ist. Die vorgefüllten chromatographischen Kolonnen haben den Vorteil, dass sie wiederholt verwendet werden, derart die Füllungen völlig ausgenutzt werden können und selbst die Reproduzierbarkeit der Messungen nimmt kräftig zu. Diese Kolonnen sind doch mit dem Mangel verbunden, dass sie nur mit begrenzten Füllungssorten vertrieben werden und ihre Neuauffüllung kann schwer oder gar nicht in die Wirklichkeit umgesetzt werden.

Das Ziel der Erfindung ist eine nachfüllbare Niederdruckkolonne für präparative Chromatographie zu schaffen, mit welcher auch mehrere Trennungsverfahren einfach, durch den Umtausch der Füllung der Kolonne ergebnisvoll und reproduzierbar durchgeführt werden können und welche so auf niedrigen wie auf mittleren Drücken gleich ergebnisvoll ist.

Die Erfindung ruht auf Erkenntnis, dass die Füllungen einer chromatographischen Kolonne beliebig oft erneuert bzw. ausgetauscht werden können, ferner die Kolonne bis verschiedenen hohen Drücken einsatzbereit ist, wenn die Dichtelemente der jeweiligen Aufgabe entsprechend ausgetauscht werden und einen völlig dichten Abschluss der Kolonne sichern, wobei nicht einmal die Öffnung der Kolonne verhindert wird.

Die gestellte Aufgabe wurde mit einer nachfüllbaren Niederdruckkolonne für präparative Chromatographie gelöst, die einen, eine Absorptionslösung enthaltenden rohrförmigen Körper aufweist, an dessen beiden Enden je ein Halsabschnitt ausgebildet und in jedem Halsabschnitt ein gegen axiale Bewegung befestigter und einen Einströmkanal enthaltender Kern angeordnet ist, dem ein Filter-und Verteilerelement im Weg des Einströmkanals angeschlossen ist. Diese Kolonne wurde erfindungsgemäss derart weiterentwickelt, dass mindestens ein elastischer Dichtring zwischen dem Kern und der Wandung des Halsabschnitts axial unverschiebbar angeordnet und der Kern mittels eines am Halsabschnitt des Körpers lösbar befestigten Elementes in seiner Lage gehalten ist.

Gemäss einem vorteilhaften Ausführungsbeispiel der erfindungsgemässen Niederdruckkolonne ist eine Schulter an dem nach dem Inneren des Körpers gerichteten Ende des Kernes ausgeformt, an dem der Dichtring betriebsmässig abgestützt ist. Dadurch wird gewährleistet, dass der Dichtring ohne jegliche Bewegung dem in der Niederdruckkolonne aufgebauten Überdruck widersteht.

Gemäss einer weiteren vorteilhaften Ausführungsform der erfindgunsgemässen Niederdruckkolonne ist ein sich konisch verengender und das Positionieren des Kernes begünstigender Abschnitt zwischen dem zylinderförmigen Ende und einem inneren Sperrbereich des Halsabschnitts ausgebildet, und eine das Hineinrutschen des Kernes verhindernde innere Schulter ist im Sperrbereich aus dem eigenen Material des Halsabschnittes ausgeformt.

Es ist vorteilhaft gemäss einem weiteren Ausführungsbeispiel der Erfindung, wenn das den Kern befestigende Element als ein am mit einem Aussengewinde versehenen Ende festgeschraubte Abschlusskappe ausgebildet ist, über deren zentrale Bohrung eine engere Verlängerung des Kernes durchgeführt ist, und diese Abschlusskappe ist mittels einem an der Verlängerung aufgesetzten Sicherungsring unverlierbar befestigt.

Gemäss einer weiteren Ausführungsform der erfindungsgemässen Niederdruckkolonne ist es vorteilhaft, wenn der Dichtring aus dem Material Tetrafluoräthylen hergestellt ist, wodurch die einwandfreie Dichtung und der Abschluss der Kolonne langzeitig gewährleistet wird.

Es ist ferner vorteilbar, wenn der Einströmkanal eine im Kern unbewegbar befestigte Metallkapillare ist, die unmittelbar in das im Kern eingesetzten poröse gläserne oder keramische Filter-und Verteilerelement mündet.

Unter den wichtigsten Vorteilen der erfindungsgemässen Niederdruckkolonne können wir erwähnen, dass die Dichtung durch den Austausch oder die Umgruppierung bei der Erneuerung oder beim Umtauschen der Füllung ersetzt oder ausgestaltet werden kann. Von den jeweilig eingebauten Dichtringen abhängig kann die erfindungsgemässe Kolonne bis Überdrücken von 20-25 bar verwendet werden, wobei die Kolonne gegen wässrige und organische Lösungen widerstandsfähig ist.

Die Erfindung wird nachstehend anhand der beigelegten Zeichnung näher erläutert, die eine mögliche Ausführungsform der erfindungsgemässen Kolonne, teilweise geschnitten darstellt.

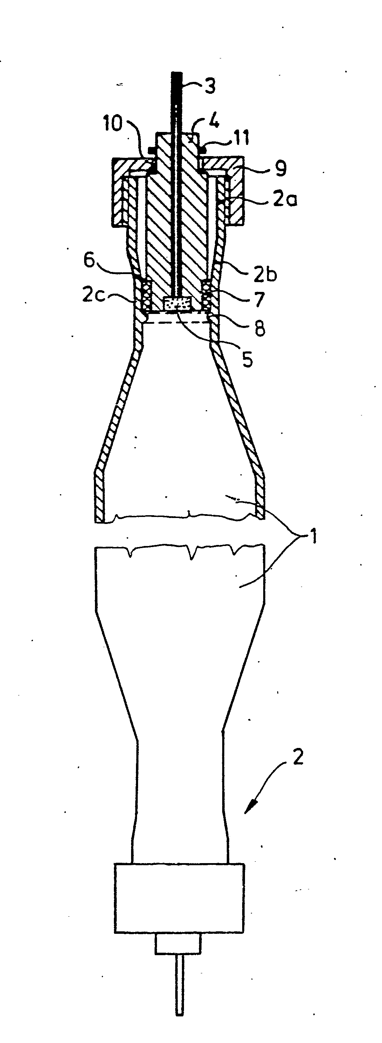

Wie aus der Figur entnehmbar, hat ein rohrförmiger Kolonnenkörper 1 an beiden Enden je einen Halsabschnitt 2, der in ein zylindrisches äusseres Ende 2a mit einem Aussengewinde, in einen konisch verengenden Abschnitt 2b und einen ebenfalls zylindrischen Sperrbereich 2c gegliedert ist. Der Kolonnenkörper 1 kann aus Metall, aus entsprechend widerstandsfähigem Kunststoff oder wie im dargestellten Beispiel aus hinsichtlich Bearbeitung und Widerstandsfähigkeit vorteilhaftem Glas hergestellt werden. Im Halsabschnitt 2 ist ein einen Einströmkanal 3 konzentrisch aufnehmender zylindrischer Kern 4 angeordnet, der in diesem Beispiel aus einem Material entsprechend der Festigkeit und Widerstandsfähigkeit, z.B. aus Tetrafluoräthylen hergestellt ist. Die Abmessungen des Kolonnenkörpers 1 können anwendungsgemäss zwischen breiten Grenzen, mit einer Länge von 50-1500 mm und einem Innendurchmesser von 5-150 mm bestimmt werden, während die Konizität des Abschnitts 2b des Halsabschnitts 2 einen Winkel von 2-20° aufgenommen werden kann, und der konsich verengende Abschnitt 2b übergeht in einem zylindrischen Sperrbereich 2c mit einer Länge von 3-15 mm.

In einem im nach dem inneren des Kolonnenkörpers 1 gerichteten Ende des Kolonnenkörpers 1 ausgebildeten Nest ist ein Filter-und Verteilerelement 5 aus porösem Glas eingesetzt, an dem ohne jedwelchen toten Raum der Einströmkanal 3 angeschlossen ist, der in diesem Beispiel eine im Kern 4 unentfernbar befestigte Metallkapillare mit einem Innendurchmesser von 0.3 - 3 mm ist. Am gleichen Ende des Kerns 4 ist ein Schulter 6 eingearbeitet, an dem wie dargestellt lediglich ein einziger Dichtring 7 abgestützt ist. Der Dichtring 7 ist ein profilierter Tetrafluoräthylen Ring. Der äussere Durchmesser des Dichtringes 7 übertrifft den Innendurchmesser des Sperrbereiches 2c des Halsabschnitts 2, so der an dem Kern 4 aufgesetzte Dichtring 7 wird nach dem Einsetzen des Kernes 4 in den Halsabschnitt 2 gegen die Wandung des Sperrbereiches 2c gepresst und gewährleistet dadurch ein dichtes Abschliessen des Kolonnenkörpers 1. Damit der Kern 4 nicht ins Innere des Kolonnenkörpers 1 rutschen kann, ist ein innere Schulter 8 aus dem eigenen Material des Halsabschnittes 2 im Sperrbereich 2c ausgeformt.

Das äussere Ende des Kernes 4 mit einem abgenommenen Durchmesser ist als eine Verlängerung über eine zentrale Bohrung 10 eines den Halsabschnitt 2 des Kolonnenkörpers abschliessenden lösbaren Elementes 9 durchgeführt. Dieses Element 9 ist in diesem Beispiel eine Gewindeabschlusskappe, die am ein Aussengewinde enthaltenden Ende 2a festgeschraubt ist. Diese Abschlusskappe wird mittels eines am Kern 4 aufgesetzten Sicherungsring 11 unverlierbar festgehalten so dass die Abschlusskappe frei um den Kern 4 gedreht aber von diesem in axiale Richtung nicht abgezogen werden kann.

Der Kolonnenkörper 1 kann natürlich auf andere bekannte Weise abgeschlossen werden, z.B. das Element 9 kann mittels Bajonettverschluss am Halsabschnitt 2 befestigt werden oder je das äussere Ende 2a des Halsabschnittes 2 und das Element 9 können mit einem Anschlussflansch versehen werden, die z.B. verschraubt sind.

Die dargestellte Niederdruckkolonne fur präparative Chromatographie kann mit Hilfe verschiedener Füllungen, d.h. Absorptionslösungen in der präparativen analyti schen, chemischen und biochemischen Praxis vielseitig verwendet werden.

**Ansprüche**

1. Nachfüllbare Niederdruckkolonne für präparative Chromatographie, die einen, eine Absorptionslösung enthaltenden rohrförmigen Kolonnenkörper aufweist, an dessen beiden Enden je ein Halsabschnitt ausgebildet ist und in jedem Halsabschnitt ein gegen axiale Bewegung befestigter und einem Einströmkanal enthaltender Kern angeordnet ist, dem ein Filter-und Verteilerelement im Weg des Einströmkanals angeschlossen ist, **dadurch gekennzeichnet**, dass mindestens ein elastischer Dichtring /7/ zwischen dem Kern /4/ und der Wandung des Halsabschnittes /2/ axial unverschiebbar angeordnet und der Kern /4/ mittels einem am Halsabschnitt /2/ des Kolonnenkörpers lösbar befestigten Element /9/ in seiner Lage gehalten ist.

2. Niederdruckkolonne nach Anspruch 1, **dadurch gekennzeichnet**, dass eine Schulter an dem nach dem Inneren des Kolonnenkörpers /1/ gerichteten Ende des Kernes /4/ ausgeformt ist, an dem der Dichtring /7/ betriebsmässig abgestützt ist.

3. Niederdruckkolonne nach Anspruch 1 oder 2, **dadurch gekennzeichnet**, dass ein sich konisch verengender und das Positionieren des Kernes begünstigender Abschnitt /2b/ zwischen dem zylinderförmigen Ende /2a/ und einem inneren Sperrbereich /2c/ des Halsabschnitts /2/ ausgebildet, und ein das Hineinrutschen des Kernes /4/ verhindernder innerer Schulter /8/ im Sperrbereich /2c/ aus dem eigenen Material des Halsabschnitts /2/ ausgeformt ist.

4. Niederdruckkolonne nach Anspruch 1, **dadurch gekennzeichnet**, dass das Element /9/ als ein am mit einem Aussengewinde versehenen Ende /2a/ festgeschraubte Abschlusskappe ausgebildet ist, über deren zentrale Bohrung /10/ eine engere Verlängerung des Kernes /4/ durchgeführt und ein die Abschlusskappe unverlierbar festhaltender Sicherungsring /11/ an dieser Verlängerung aufgesetzt ist.

5. Niederdruckkolonne nach einem der Ansprüche 1 bis 4, **dadurch gekennzeichnet**, dass der Dichtring /7/ mittels einem profilierten Tetrafluoräthylen-Ring verwirklicht ist.

6. Niederdruckkolonne nach einem der Ansprüche 1 bis 5, **dadurch gekennzeichnet**, dass der Einströmkanal /3/ eine im Kern /4/ unbewegbar befestigte Metallkapillare ist, die unmittelbar in das in dem Kern /4/ eingesetzten poröse, gläserne oder keramische Filter-und Verteilerelement /5/ mündet.